# EUROPEAN PATENT SPECIFICATION

(11) **EP 0 137 653 B1**
(45) Date of publication and mention of the grant of the patent: **18.01.1995**
(21) Application number: 84305562.5
(22) Date of filing: 16.08.1984
(51) Int. Cl.: G02B 6/38, H02G 15/18

(54) **Coupling device**
Kupplungsvorrichtung
Dispositif de couplage

(30) Priority: 16.08.1983 GB 8322033
(43) Date of publication of application: 17.04.1985
(73) Proprietor: Hamblin, Brian David, Rochdale Lancashire (GB); Barlian, Reinhold, D-97999 Igersheim (DE)
(72) Inventor: Hamblin, Brian David, Rochdale Lancashire (GB); Fischle, Martin, D-6990 Bad Mergentheim Loffelsteizen (DE); Barlian, Reinhold, D-6991 Igersheim (DE); Nied, Rolf, D-6971 Assamstadt (DE)
(74) Representative: Low, Peter John

(56) References cited:
- EP-A- 0 125 795
- DE-A- 1 925 781
- DE-A- 2 401 589
- DE-A- 3 011 902
- FR-A- 2 418 943
- GB-A- 2 027 932
- GB-A- 2 058 484
- US-A- 3 948 582
- US-A- 4 329 540
- US-A- 4 345 816
- European Standard EN 50018, Edition 1, March 1977

## Description

This invention relates to a coupling device.

The development of optical coupling and fibre optical coupling has resulted in the use thereof for passing data between different pieces of equipment or internally between parts of a single piece of equipment for example computer input and/or output signals, switching signals, television signals, audio signals, and so on. Optical signals, unlike electrical signals, do not generate any induced signals and, therefore, fibre optics do not require any screening. In addition optical coupling can be used as a form of isolation between two items for example a power supply and a low energy circuit such as an intrinsically safe circuit. The presence of optical coupling prevents the intrinsically safe circuit becoming unsafe as might happen if there were to be a cross feed or flashover.

However, while such optical isolation will deal with an electrical energy overload it cannot deal with the problems created by hot gases resulting from an explosion.

According to the invention there is provided an explosion proof electrical optical coupling device for connecting together separate items of electrical equipment so that a signal can be passed between said equipment, said device comprising a body containing optical means for electrically isolating the equipment connected by the device, electrical connection to the isolating means for electrically connecting the coupling device to equipment, material surrounding both the isolating means and the electrical connection thereto, said material extending across the body to form a fluid-tight, explosion proof barrier in the body, and the body being connectable to one of said items of equipment to form an explosion proof, threaded connection or an explosion proof connection by a circlip between the exterior of the body and the equipment, whereby an explosion in one of said items of equipment is prevented from being transmitted through the device to another item of electrical equipment connected thereto.

The design of the body is not critical and is chosen to suit the particular equipment to which it is to be connected. If desired an adaptor can be fitted to the body to render it compatible with a piece of equipment and if necessary secured thereto and/or to meet a specific standard relating to the prevention of explosion transmissions in this type of equipment.

The invention in its simplest form contains only one isolation means for example an optical coupling. Where necessary additional isolation means can be included. In addition the body may house one or more electric conductors which have no isolation included therein.

Any material can be used for forming the barrier. Preferred materials are epoxy or polyurethane resins or other hard setting resins which are preferably non-reversible and not capable of being softened. Any other material which can form a fluid tight, explosion-proof, barrier can be used. The body and material forming the barrier can be integral or alternatively the body can be a separate item in which material is disposed to form the barrier.

Specific embodiments of the invention will now be described by way of example with reference to the accompanying drawings in which:-
- Fig.1: is a longitudinal section through an embodiment of a coupling device;
- Figs.2A-2C: illustrate different external configurations of coupling devices;
- Figs.3 and 4: are longitudinal sections of two further embodiments of coupling devices.

In various embodiments similar parts have the same reference numbers.

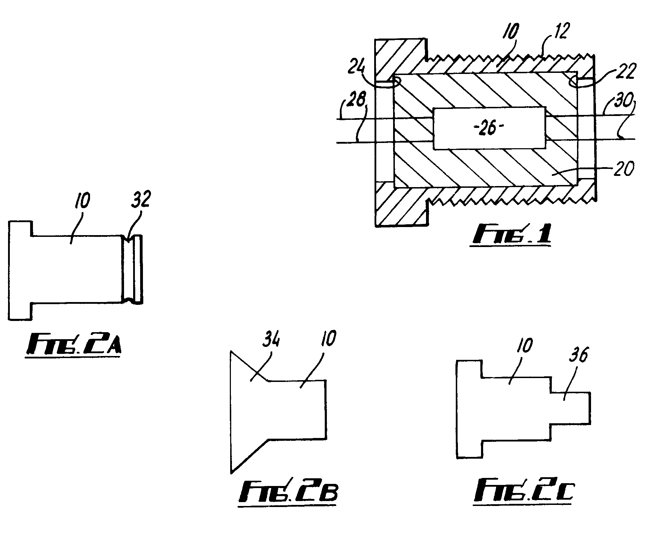

Referring to Fig.1 a body 10 contains an optical isolator 26 connected to pairs of leads 28 and 30 for connection to electrical circuits.

The body may be externally threaded as at 12 for reception in the tapped hole of an electrical optical fitting or for location between two internal compartments of a piece of equipment.

The coupling 26 and leads 28 and 30 leading to the coupling are surrounded by a compound 20, such as an epoxy putty, which extends across the width of the body and forms a fluid-tight, explosion-proof, barrier.

Inturned flanges 22 and 24 at each end of the body or any other suitable internal protrusions or recesses, assist in keeping the compound in place. End pieces (not shown) may be fitted to the body to close it off to prevent any access to the filler compound.

It is to be understood that the arrangement of Fig.1 is merely an example of a coupling within the invention. The number of connections and/or isolators within the body can be increased. A single coupling device can include different kinds of connector or isolator and may additionally include electrical conductors with no break or isolator. Where the connector or isolator is unidirectional, a plurality of such connectors or isolators in a single device may be arranged in the same or in different directions.

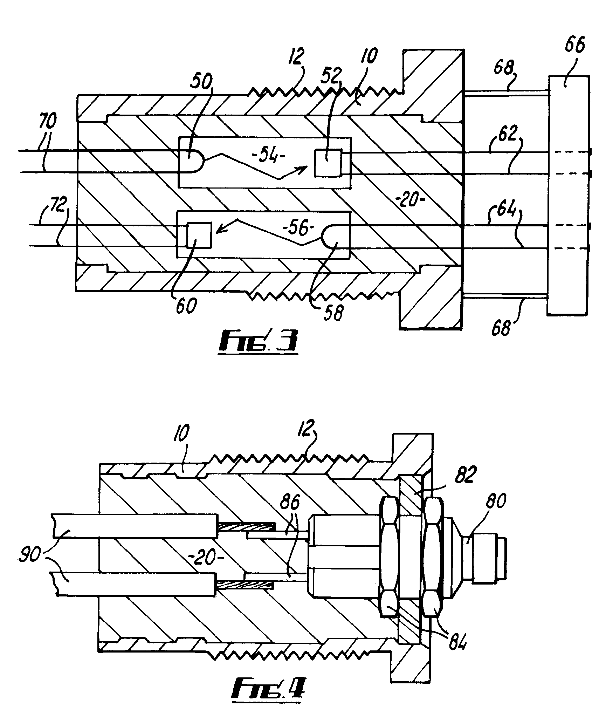

The exterior of body 10 can be modified to suit the equipment to which it is to be fitted. Examples are shown in Figs.2A-2C. For instance, as shown in Fig.2A the body can be unthreaded and held in place in a fitting by a circlip that is received in groove 32. Instead of being externally stepped as shown in the previous figure, the body may have a frusto conical head 34 as illustrated in Fig.2B. As shown in Fig.2C the body may have a portion 36 at one end thereof which is of reduced external cross-section. In other words any other shape can be used which is adapted to be complementary to the mounting for the device.

When the body is externally threaded the threads may be provided adjacent one end rather than along most of the length of the body. Such an embodiment can be received in an untapped aperture in a fitting and held in place by a nut within the fitting engaged on the threaded portion.

Instead of flying leads or fibres as illustrated in the drawings a plug or socket may be provided at one or both ends thereof of the body for the purposes of connection. The plug or socket may be externally profiled to permit it to be used to engage the coupling device to a piece of equipment. The plug connection can be a push fit, a threaded connection or any other suitable fastening.

Where an optical isolator is used which includes a radiation emitting diode, for example, adapted to transmit light radiation to a photo transistor circuit or any other suitable receiver, an amplifier may be necessary to restore the signal level. Such an amplifier can be included as an integral part of the coupling device of the invention or it can be adapted to be disconnected if desired. In addition it is not essential to use a receiver for radiation from the radiation emitting diode which produces a signal, for example a light emitting diode. Instead the presence of radiation from an emitter can be used to close a circuit, that is to say in the manner of a switch. In this way no additional current is generated - a very useful feature if the coupling device of the invention is to be used in hazardous areas.

An embodiment incorporating these features is illustrated in Fig.3. The body 10 contains a radiation emitter such as a light emitting diode 50 and a receiver such as photo transistor 52 contained in a matrix 54 through which the radiation can pass such as glass. A second matrix 56 contains a similar arrangement of emitter 58 and receiver 60 but arranged in the opposite sense to matrix 54. Leads 62 from the receiver 52 in matrix 54 and leads 64 from the emitter 58 in matrix 56 are taken to a terminal block 66 secured to the the body as by rods 68. Leads 70 from the emitter 50 in matrix 54 and leads 72 from the receiver 60 are taken to the other end of the body and may be terminated in a plug or left as flying leads as illustrated.

Thus, for example, a circuit can be connected, via the terminal block to leads 64, which can be used to trigger a junction connected to the leads 72. When that junction has been completed a signal can be passed to leads 70 which in turn can actuate a circuit connected via the terminal block to leads 62.

The invention also includes devices in which the input signal is converted from an electrical signal to an optical signal or vice-versa. For example an electrical input signal can be used to energise a light source, such as a light emitting diode, the emission from which is received by optical fibres. The opposite arrangement is provided for example where the input is an optical signal, the emission from, for example, optical fibres, being received by a light sensitive means such as a photo transistor which produces an electrical signal. The electrical signal may be amplified if desired.

An embodiment of the above kind is illustrated in Fig.4. A light emitting diode 80 is clamped to a plastic bush 82 by nuts 84 and the bush received in one end of the body 10. The connections 86 to the light emitting diode are soldered to leads 90 which extend from the other end of the body.

## Claims

1. An explosion proof electrical optical coupling device for connecting together separate items of electrical equipment so that a signal can be passed between said equipment, said device comprising a body containing optical means for electrically isolating the equipment connected by the device, electrical connection to the isolating means for electrically connecting the coupling device to equipment, material surrounding both the isolating means and the electrical connection thereto, said material extending across the body to form a fluid-tight, explosion proof barrier in the body, and the body being connectable to one of said items of equipment to form an explosion proof, threaded connection or an explosion proof connection by a circlip between the exterior of the body and the equipment, whereby an explosion in one of said items of equipment is prevented from being transmitted through the device to another item of electrical equipment connected thereto.

2. A device as claimed in Claim 1, wherein the body contains a plurality of isolation means.

3. A device as claimed in any preceding claim, wherein the isolation means connects electrical conductors.

4. A device as claimed in Claim 1 or Claim 2, wherein the isolation means provides for conversion of an optical signal to an electrical signal.

5. A device as claimed in Claim 1 or Claim 2, wherein isolation means provides for conversion of an electrical signal to an optical signal.

6. A device as claimed in any preceding claim wherein the body is adapted to be secured to the equipment.

7. A device as claimed in any preceding claim and comprising means for amplifying the signal delivered from the device.

8. A device as claimed in any preceding claim, wherein the isolation means is unidirectional and at least two of said isolation means are provided and arranged to operate in opposite directions.

9. A device as claimed in any preceding claim, wherein the body also contains additional means for connecting items of equipment, said additional means not including any isolation means.

## Patentansprüche

1. Explosionsgeschützte elektro-optische Kopplervorrichtung, um gesonderte Einheiten elektrischer Ausrüstung miteinander so zu verbinden, daß ein Signal zwischen besagter Ausrüstung übertragen werden kann, wobei die genannte Vorrichtung einen Körper, der ein optisches Mittel zur elektrischen Isolation der mittels der Vorrichtung verbundenen Ausrüstung enthält, eine elektrische Verbindung zu dem Isolationsmittel, um die Kopplervorrichtung mit der Ausrüstung elektrisch zu verbinden, und ein sowohl das Isolationsmittel als auch die zu ihm führende elektrische Verbindung umgebendes Material aufweist, wobei das genannte Material sich durch den Körper so erstreckt, daß in dem Körper eine fluiddichte, explosionssichere Sperre gebildet wird, und wobei der Körper mit einer der genannten Ausrüstungseinheiten so verbindbar ist, daß eine explosionsgeschützte Schraubverbindung oder eine explosionsgeschützte Verbindung mittels einer Sicherungsscheibe zwischen der Außenseite des Körpers und der Ausrüstung gebildet wird, wodurch eine Explosion in einer der genannten Ausrüstungseinheiten daran gehindert wird, über die Vorrichtung auf die andere Einheit elektrischer Ausrüstung übertragen zu werden, die mit ihr in Verbindung ist.

2. Vorrichtung nach Anspruch 1, bei der der Körper eine Mehrzahl der Isolationsmittel enthält.

3. Vorrichtung nach einem der vorausgehenden Ansprüche, bei dem das Isolationsmittel elektrische Leitungen verbindet.

4. Vorrichtung nach Anspruch 1 oder 2, bei der das Isolationsmittel zur Umwandlung eines optischen Signals in ein elektrisches Signal vorgesehen ist.

5. Vorrichtung nach Anspruch 1 oder 2, bei der das Isolationsmittel zur Umwandlung eines elektrischen Signals in ein optisches Signal vorgesehen ist.

6. Vorrichtung nach irgendeinem vorausgehenden Anspruch, bei der der Körper dazu eingerichtet ist, an der Ausrüstung befestigt zu werden.

7. Vorrichtung nach irgendeinem vorausgehenden Anspruch und ein Mittel aufweisend, um das von der Vorrichtung gelieferte Signal zu verstärken.

8. Vorrichtung nach irgendeinem vorausgehenden Anspruch, bei der das Isolationsmittel in eine Richtung wirkend ist und zumindest zwei der genannten Isolationsmittel vorgesehen und so angeordnet sind, daß sie in zueinander entgegengesetzte Richtungen arbeiten.

9. Vorrichtung nach irgendeinem vorausgehenden Anspruch, bei der der Körper auch ein zusätzliches Mittel enthält, um Einheiten der Ausrüstung zu verbinden, wobei das genannte zusätzliche Mittel frei von irgendeinem Isolationsmittel ist.

## Revendications

1. Dispositif de couplage opto- électrique, résistant aux explosions, servant à connecter ensemble des éléments séparés d'un équipement électrique, de manière qu'un signal puisse passer dans ledit équipement, ledit dispositif comprenant un corps contenant un moyen optique servant à isoler électriquement l'équipement connecté par le dispositif, une connexion électrique au moyen isolant, afin de connecter électriquement le dispositif de couplage à l'équipement, un matériau entourant à la fois le moyen isolant et la connexion électrique à ce dernier, ledit matériau s'étendant au-dessus du corps afin de former dans le corps une barrière étanche aux fluides, résistant aux explosions, et le corps pouvant être relié à l'un desdits éléments de l'équipement afin de former une connexion filetée résistant aux explosions ou une connexion résistant aux explosions au moyen d'un circlip entre l'extérieur du corps et l'équipement, de manière à empêcher la transmission de toute explosion dans l'un desdits éléments de l'équipement, à travers le dispositif, à un autre élément de l'équipement électrique, connecté à ce dernier.

2. Dispositif selon la revendication 1, dans lequel le corps contient une pluralité de moyens isolants.

3. Dispositif selon l'une quelconque des revendications précédentes, dans lequel le moyen isolant relie des conducteurs électriques.

4. Dispositif selon la revendication 1 ou la revendication 2, dans lequel le moyen isolant permet la conversion d'un signal optique en un signal électrique.

5. Dispositif selon la revendication 1 ou la revendication 2, dans lequel le moyen isolant permet la conversion d'un signal électrique en un signal optique.

6. Dispositif selon l'une quelconque des revendications précédentes, dans lequel le corps est agencé de façon à être fixé à l'équipement.

7. Dispositif selon l'une quelconque des revendications précédentes, comprenant un moyen servant à amplifier le signal fourni par le dispositif.

8. Dispositif selon l'une quelconque des revendications précédentes, dans lequel le moyen isolant est unidirectionnel et au moins deux desdits moyens isolants sont prévus et agencés de façon à fonctionner dans des directions opposées.

9. Dispositif selon l'une quelconque des revendications précédentes, dans lequel le corps contient également un moyen supplémentaire servant à des éléments de l'équipement, ledit moyen supplémentaire ne comportant aucun moyen isolant.
